# EUROPEAN PATENT SPECIFICATION

(11) **EP 2 512 715 B1**
(45) Date of publication and mention of the grant of the patent: **11.03.2015**
(21) Application number: 10812809.1
(22) Date of filing: 17.12.2010
(51) Int. Cl.: B23D 57/00, B28D 1/08, B28D 7/02, B28D 1/02

(54) **DIAMOND WIRE CUTTING MACHINE FOR NATURAL AND ARTIFICIAL STONE WITH WIRE CLEANING PLANT**
DIAMANTDRAHTSCHNEIDEMASCHINE FÜR NATÜRLICHE UND KÜNSTLICHE STEINE MIT DRAHTREINIGUNGSANLAGE
MACHINE DE TAILLE À FIL DIAMANT POUR PIERRES NATURELLES ET ARTIFICIELLES, DOTÉE D'UN ÉQUIPEMENT DE NETTOYAGE DE FIL

(30) Priority: 18.12.2009 IT MO20090297
(43) Date of publication of application: 24.10.2012
(73) Proprietor: Pedrini SpA ad Unico Socio, 24060 Carobbio degli Angeli (BG) (IT)
(72) Inventor: Pedrini Luigi, deceased (IT)
(74) Representative: Gasparini, Alberto
(86) International application number: PCT/IT2010/000503
(87) International publication number: WO 2011/074026

(56) References cited:
- WO-A1-2009/040841
- CH-A- 349 533
- DE-A1- 3 118 505
- IT-B- 1 221 637
- JP-A- 2 292 165
- US-A1- 2007 251 516

## Description

### Field of application

The present invention refers to a diamond wire machine for cutting natural or artificial stone according to the preamble of claim 1.

### Prior art

Such a diamond wire machine is known from WO2009040841A1.

Existing technology in machines that use diamond wires or loops of diamond wire comprises, systems for transferring cooling water for the diamond wire which is within the grooves created in the material being cut, i.e. in the block in which the slabs are cut simultaneously with multi-wire machines, that is where the multiple wires cut downwards into adjacent cuts in the stone block removing swarf material constituting the cut that is created.

The diamond wire is constituted by a cable on which at a predetermined distance diamond inserts, which have a diameter greater than that of the said cable, are fixed. The section of wire, therefore, is not constant and the diamond inserts work on the sides of the cut removing swarf for the whole length of the said cut without allowing contact between the cable and the walls of the cut being carried out.

In the field it is known that, during use, the diamond inserts cut into stone with diamond and create swarf in the cut; the insert is cooled through the addition of cooling water used in the field to facilitate the removal and detachment of swarf from the wire. Moreover, it is known that the cutting action of the diamond wire on the stone becomes more economical when the advancing speed of the wire cutting through the stone block is increased.

However, the heat created limits the speed of the diamond wire, even when the wire is removed in the recognized way with water abundantly sprayed into the cuts on the stone block . The heat limits both the speed of the cutting and the advancement, i.e. the deepening of the cut, as it causes excessive consumption of the diamond. Consequently, the development of the technology has seen the simultaneous use of multiple diamond wires for cutting the block at a cutting speed of 20m/s.

In the technology specific to the materials of the matrix of the insert, the heating of the insert is needed to restart the cut, as the diamond cutter, if it not cutting efficiently, heats up and softens the matrix to the extent that it detaches itself and becomes mixed with the swarf. The consumption, therefore, of the diamond is necessary in order to obtain a better cut, but counterproductive in that it generates the cost of consumption of the diamond during cutting. The greatest consumption of diamond that is not acceptable has been tested, in the case of multi-wire machines, as well as for greater cutting speeds and advancing speeds in order to limit the use of an optimum cutting speed of 28-31 m/s and an advancing speed with a larger margin of variation, from 10 to 100 cm/h, depending on the lithotype of stone being cut.

Consequently, in recognized technology, in particular in cutting machines with a diamond wire equipped with multiple loops of diamond wire there is a working limit of the wire due to the consumption of diamond during cutting. This creates the said advancing speed limit at which the diamond can work and which, considering the substantial length of cut in the block, decreases the cutting performance, when compared to the cutting conditions that can be reached from the same type of diamond used in different utensils such as the circular blades, which are recognized in this technological field.

Furthermore, the diamond wire carries out the function of removal of swarf from the cut, as described above, aided by the addition of cooling water. The swarf is composed of material removed from the walls of the cut and from the diamonds that become detached and lost from the diamond inserts during cutting. Consequently, the material removed covers the diamond wire when exiting the cut at the end of the stone block and most of this material detaches from the diamond wire during the distance covered by the wire in the same machine before reentering into the cut on the opposite side of the block. In usual cutting conditions, the diamond wire cleans itself of the material removed through gravity or through centrifugal force on pulleys, rollers or drums.

Such cleaning is not very efficient, especially in multi-wire machines, as the dirt left has been known to damage the organs of the machine, which negatively influences the regularity and precision of its functioning.

Therefore, the existing technology can be substantially optimized in terms of the possibility of overcoming the well-known functional limits of diamond wires in block-cutting machines for artificial and natural stone.

Thus, the technological problem that forms the basis of the present invention is to achieve the best working conditions for diamond wires and in particular for the inserts in the cutting groove.

In addition to the said technological problem, there is the problem of maintaining optimal cleanliness of the wire with the diamond inserts for the execution of cutting, even when a large quantity of swarf is created by increased advancing speed of the diamond wire which cuts into the stone block.

A further aspect related to the above technological problem is that of achieving an efficient system of water supply that is economical to run and not damaging to the environment in order to remove the swarf from the diamond wire.

### Summary of the invention

This technological problem is resolved, according to the present invention, by a diamond wire machine for cutting natural or artificial stone having the features of claim 1.

In a further, more advantageous form of construction multiple closed loop diamond wires simultaneously cut a block of stone.

Furthermore, in a further, optimized form of construction, in addition to the first washing area there is at least a second washing area on the line of movement of the diamond wire connected to it and positioned at the same interval as the first washing area.

In addition, in a preferred variant of the form of construction, there are at least three washing areas, of which one is positioned on the first organ of support and motorization of the said wire.

Furthermore, in a specific form of construction, there are at least three washing areas, of which at least two are positioned near to each other after the cutting area and before the first organ of support and motorization of the said wire.

In addition, in a further, optimized form of construction, the washing areas are at least four of which at least two are positioned near to each other after the cutting area and before the first organ of support and motorization of the said wire and the fourth is positioned on the first organ of support and motorization of the said wire.

Furthermore, in a specific form of construction, the washing areas comprise a transversal tube equipped with nozzles with an elliptic jet, having larger dimension than the jet placed in the direction of the diamond wire and aligned with it.

In addition, in a further form of construction, the washing areas comprise a transversal tube equipped with nozzles aligned on staggered lines in correspondence with the position of the contiguous diamond wires.

Furthermore, in a specific form of construction, the pressure of the cleaning water is high, to result in an exit speed of between 20 and 30 m/s inclusively of the jet from its relative nozzle.

Finally, in a further and preferred from of construction, the filtration and pump assembly comprises two metallic cartridge filters that work in tandem or alternately when it is necessary to perform maintenance and cleaning on one of the filters.

Further characteristics and advantages of the present invention, in the achievement of a diamond wire machine for cutting artificial or natural stone with a wire-cleaning system, will be shown in the description which follows of an example provided as a guide which is not restrictive, with reference to the five drawings attached.

### Brief description of the drawings

Figure 1 represents a schematic perspective view of a multi-wire machine for cutting stone blocks with closed loop diamond wires equipped with a cleaning system according to the invention;
Figure 2 represents a.schematic side view of the drum for support and transmission of cutting motion to the multiple diamond wires in which the position of the washing points for the wires with the cleaning system is visible according to the invention;
Figure 3 represents a schematic side view in slight perspective of a water distribution tube to the diamond wires, equipped with nozzles distributed in correspondence with the wires;
Figure 4 represents a partial schematic side view of the distribution tube of Figure 3 with a section view of the diamond wires positioned underneath and in correspondence with some of the nozzles;
Figure 5 represents a schematic section V-V of Figure 4 with the jet of water sprayed from the nozzle onto the diamond wire underneath;

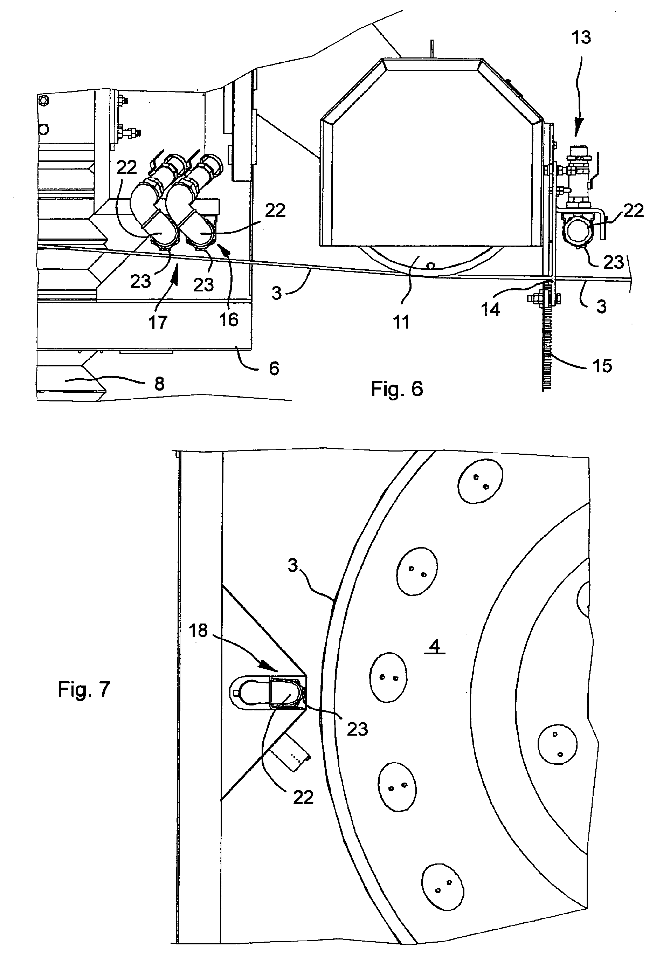

Figure 6 represents an enlarged schematic side view of the washing points before and after the wire-steering roller in the part where the diamond wire exits from the stone block being cut;
Figure 7 represents an enlarged schematic side view of a part of the drum for support and transmission of the cutting motion to the diamond wires in which a further washing point for the diamond wires is visible when the diamond wires are wound on the said drum;
Figure 8 represents a schematic perspective view, limited to a part of the cleaning-water distribution tube in which the constitution of the nozzles is visible, as well as the jet of water generated from one nozzle;
Figure 9, finally, represents a view and a partial schematic section in perspective of the filtration and pump assembly for the recirculation and supply of cleaning water to the nozzles.

### A detailed description of a preferred embodiment of the invention

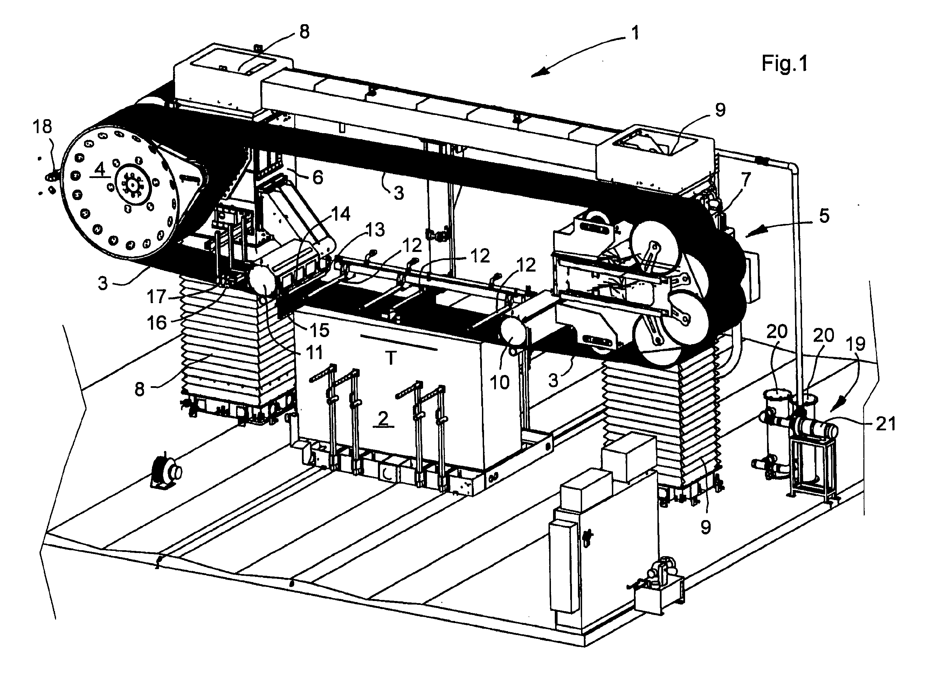

In Figure 1 the multi-wire machine 1 for cutting blocks of stone 2 is visible in which multiple loops of diamond wire 3 are supported between a drum 4 for support and motorization of the diamond wires, constituting the first organ of support and motorization met by the wire after the cut, and a device for support and tensioning 5 already known in the field. The drum 4 and the device for tensioning 5 are supported on synchronous vertical motion carriages, 6 and 7 respectively, made mobile on columns 8 and 9 at the sides of the stone block 2 being cut. In the lower part of the diamond wires including the part between the columns 8 and 9 and the stone block 2 a first wire-steering roller 10 before the block 2 in the T cutting motion of the wires and a second wire-steering roller 11 after the stone block being cut are inserted into the course of the diamond wire loops 3: the wire-steering rollers operate in a way that is known in the field, to guide the wires across the stone block to the correct distance, in order to obtain the correct cutting grooves and therefore slabs of the thickness desired by the user.

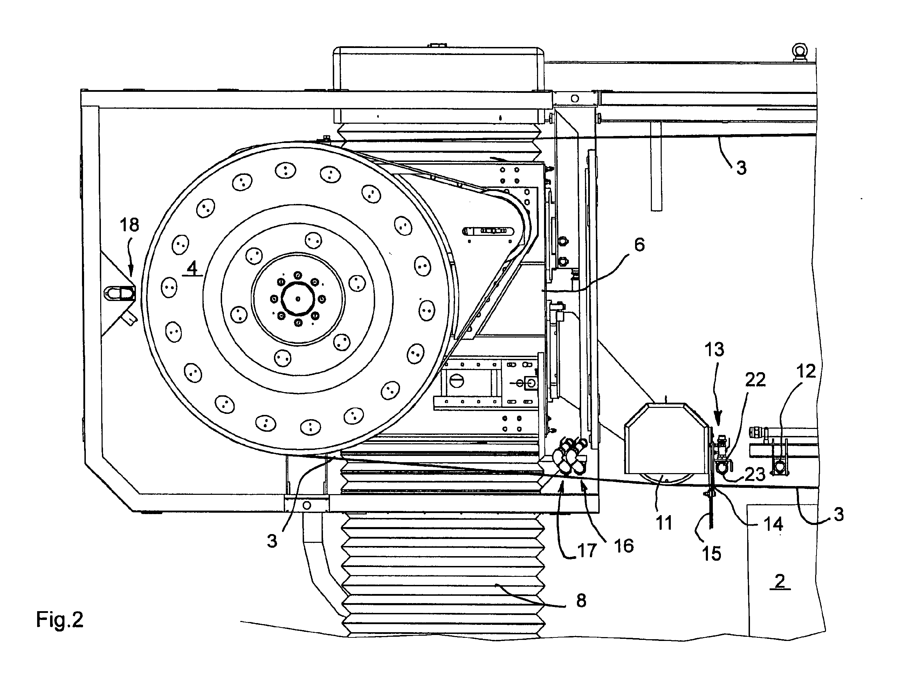

The direction of the cutting motion T indicates the course of the looped diamond wires 3, which enter into the grooves of the cuts in the block immediately after the first wire-steering roller 10, before, and exit the grooves shortly before the second wire-steering roller 11, after the stone block. The part of diamond wire that penetrates into the grooves is cooled with water which is spread by means of a distribution system 12, recognized in the field, which is placed above the upper face of the block 2. The diamond wires 3, before reaching the second wire-steering roller, pass into the first washing point 13 and then into a port 14 of a collection wall 15 for cooling water along with the swarf removed on exiting from the grooves. After the second wire-steering roller 11 are placed two further washing points 16 and 17 next to each other. A fourth washing point 18 is positioned close to the edge of the drum 4 for support and motorization. The recirculation of cleaning water collected together with the swarf takes place in the filtration and pump assembly 19, which comprises two metallic cartridge filters 20 and an electro-pump 21, in order to return cleaning water to the cycle cleaning it of any swarf. The cooling water distribution system 12 remains stationary for the duration of the cutting operation, while the washing points together with the drum 4 and wire-steering rollers, and clearly also the tensioning device 5, are vertically mobile as the diamond wires 3 cut deeper into the grooves in the stone block 2. Furthermore, more clearly visible in Figure 2 is the first washing point 13 constituted by a tube 22 transversal to the course of the diamond wires 3 and equipped with nozzles 23 in the lower part closer to the diamond wires underneath. The two successive washing points 16 and 17, placed close to each other, after the second wire-steering roller 11, present the same constitution, i.e. with the transversal tube 22 and the nozzles 23 directed toward the wires underneath; the fourth washing point 18 is also constituted by a transversal tube 22 with nozzles 23, which, however, are directed toward the supporting throats of the diamond wire on the drum for support and motorization 4. On exiting the groove of the block 2, due to gravity, drops of cooling water fall from the diamond wire with a slightly curved trajectory onto the collection wall 15, under the port 14, and into the collection canals, which are not represented, but are present in these machines.

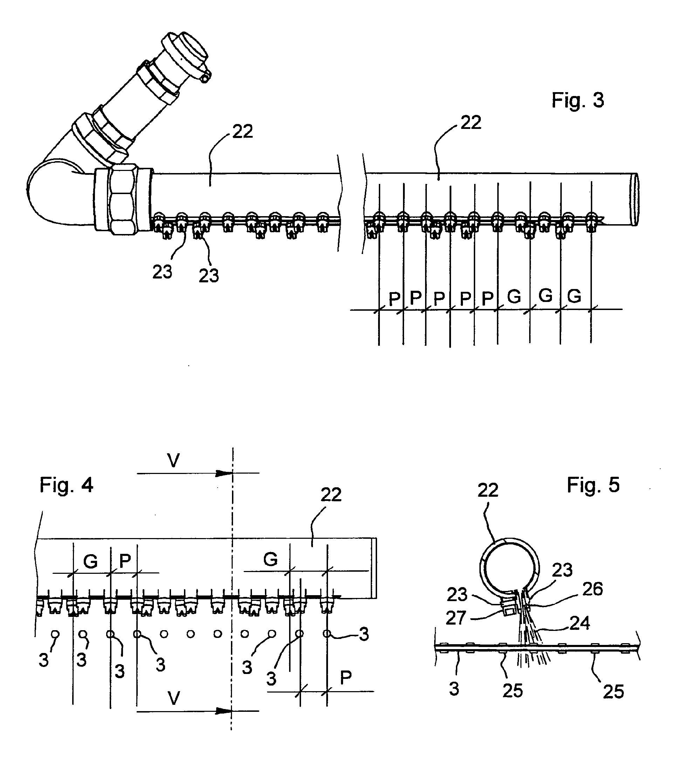

In the Figures from 3 to 5, a transversal tube 22 is visible, on which nozzles are placed on two adjacent lines. The nozzles are distributed at short intervals P and long intervals G, which allows the user to position the diamond wires at a distance to obtain two different thicknesses of stone slab between grooves positioned side by side. The most common thicknesses are 20 mm and 30 mm, thus the longer interval G allows the user to obtain a slab thickness of 30 mm, taking into account the diameter of a diamond wire. In the same way, the shorter interval is a value equal to thickness of the smaller slab, generally 20 mm, increased by the diameter of the diamond wire. The arrangement on two lines and the way the nozzles are spaced as in the Figure makes it possible to vary the desired thickness without changing the transversal tube 22. The nozzle represented is of the elliptic type: in Figure 5 the nozzle shown in section presents a jet of water 24 coming out in a cone-shaped form in that it is narrow at the sides of the nozzle and wider as it moves toward the diamond wire, in order to amplify its area and reach a greater length of the diamond wire 3 underneath. In this way, the whole wire, including the diamond inserts 25, is wetted by the jet 24.

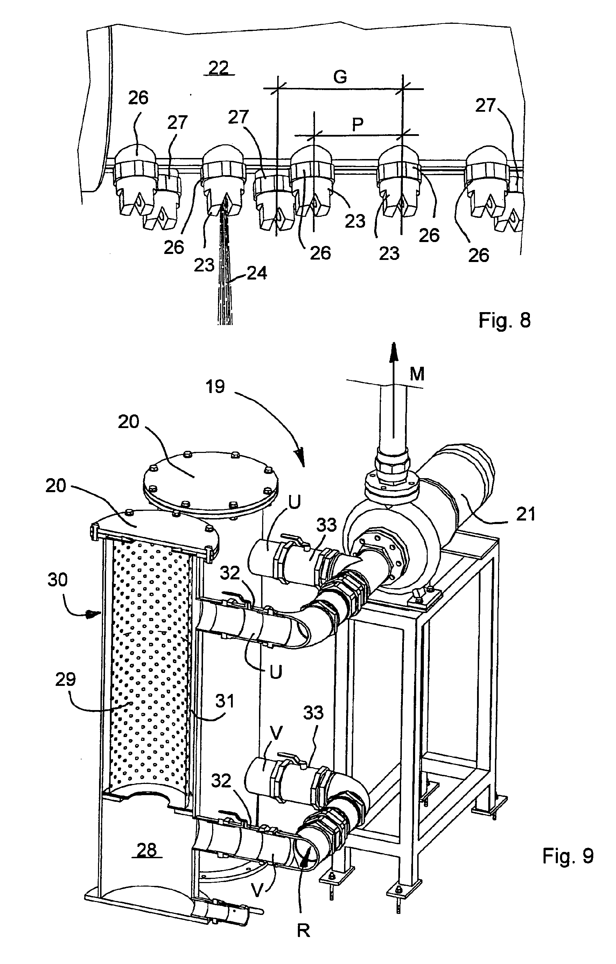

In Figure 8 the form of nozzle more appropriate for obtaining the cone-shaped elliptic jet 24 is visible in an enlarged view, and it is represented in a direction that is almost parallel to that of the diamond wire 3 and therefore on the narrow side of the cone, in order to work on the wire itself for a longer length of wire exploiting better the water jet; in addition, the arrangement on two lines allows there to be two nozzles, indicated as 26 and 27, moved closer together at a distance less than the overall diameter of a nozzle in the transversal direction of the transversal tube 22 on which they are mounted.

In Figure 9, the pump and filtration assembly 19 for cleaning water is represented. The water R coming from the machine is collected and treated by the cleansing and recirculation system, normally present in systems for cutting stone blocks and stone material. The water enters into the lower part of the two filters 20; in the lower chamber 28, the heavier parts are deposited, while the upper part 29 of the filter is constituted by a stainless steel perforated tube 30, to withhold a part of the material in suspension with the decrease in velocity of the water in the upper part of the wall cavity 31 before the exit tubing U from the filter. The group presents two filters 20 to facilitate cleaning of the perforated tube 30 excluding the one under maintenance by means of valves 32, for the first filter, and 33, of the second filter, in the entrance tubing for the water collected R, for decanting between the lower chambers 28 of the filter, and for suction U to the pump 21. There is only one outlet M from the pump and it is connected to the transversal tubes 22 in the cleaning areas as described above. The pressure of the outlet is sufficient to achieve a pressure of approximately 4 bars in the transversal tubes 22, in order to achieve a jet speed at the nozzles of between 24 and 32 m/s inclusively and a capacity of 20-30 l/min per nozzle. The perforated tube 30 presents holes of 0.8-1 mm in diameter, which is approximately half the diameter of the exit hole for the water jet from the nozzle; this proportion has been found to be the best compromise between filtering effect and loss of load in the filter itself and in the nozzles.

From tests carried out with the invention, the advancing speed during cutting, called "falling" in workshop jargon, that was obtained is approximately 10-20% greater than the advancing speed of the cut in a stone block of the same lithotype in the same conditions, but without the diamond wire cleaning system of the present invention. Consequently, the working time, i.e. the time taken to cut a block into slabs is substantially better, and there is no increase in consumption of diamond abrasive, as known in the field. Furthermore, the combination of the cooling water system 12 with the cleaning system allows for much better filtration than before, avoiding the recirculation of swarf together with the cooling water, i.e. the swarf present in the cutting grooves originates mostly from the cut, but it is not returned to the cut together with the cooling water or created from the residue of swarf that remains on the diamond wire on reentering the cut. In this case the combination of the two systems is very beneficial, the pressure of the cooling water supply is limited with adjustable gate shutters, in relation to the high pressure necessary at the washing points 13, 16,17 and 18. Therefore with the filtration of the cooling water, which has not before been provided for or carried out in a rough way, the recirculation of water avoids damage to the environment and returning the swarf, with the cooling water, into the grooves and therefore the diamond inserts can cut under better conditions.

The advantages that can be highlighted in the present invention in a diamond wire machine for cutting artificial or natural stone with a wire-cleaning system are described below.

The cleaning process finishes with a diamond wire that is clean with little or almost no swarf which returns to the groove during every course of the diamond wire, i.e. the diamond wire does not return to the cutting groove with any dirt left on it. The removal of swarf occurs with even distribution among the four points indicated: in the first washing point 13, before the second wire-steering roller 11; in the second 16 and third 17 washing points as well as in the fourth washing point 18 and also through the centrifugal force generated by the winding of the diamond wire on the drum 4 for support and motorization of the diamond wire 3 loops. The lifetime of the diamond wire is increased, firstly through decreased consumption of diamond, as stated above, and also, because the plastic covering of the wire itself, which positions the 25 diamond inserts on the wire, has a longer lifetime and is not corroded by the residues present in swarf, as occurs when the wire is not cleaned.

A further advantage is decreased dirt on the organs of the tensioning device 5 of the closed loop diamond wires 3, and decreased debris in general in the whole machine, due to the decreased quantity of swarf on the diamond wire, as a consequence of the effects of the cleaning and cooling water.

The distribution of the nozzles 23 in the transversal tube 22 allows for a water jet to be used in both possible cutting positions that the diamond wire 3 takes, the position taken for cutting slabs of lesser thickness (P) and the position taken for cutting slabs of greater thickness (G), as well as a mixed arrangement in between these two thicknesses, as is visible in Figure 3.

The adoption of a cleaning system for the diamond wire improves as stated above the advancing speed, i.e. the speed of "falling" in technical jargon, by even 20%, and so combined with improved advancing speed, the wire has a longer lifetime through the combination of effects of both the plastic covering for the wire and the decreased quantity of swarf that returns to the cutting groove and therefore does not dirty the diamond wire when it is in the cutting groove, or dirties it less.

A further and unexpected advantage was found in the contact between the diamond wire and the soft covering of the pulleys of the tensioning device 5, for the wire-steering rollers 10 and 11 and the drum 4 for support and motorization of the diamond wires; in fact a decreased quantity of swarf that dirties the diamond wire is linked to a decreased quantity of diamond dispersed, which can become stuck between the diamond wire and the soft covering material damaging it much less and causing less wear than would be the case without a cleaning system for the wire; therefore even the lifetime of the said soft material covering is significantly increased.

It is clear that a person skilled in the art, whose objective is to satisfy specific demands in certain situations, will be able to make numerous adjustments to a diamond wire machine for cutting natural or artificial stone with a wire-cleaning system as described above. All of these adjustments, however, will come into the area that protects the present invention which is defined in the following claims. Therefore, although it would be less advantageously, the two systems, that of cooling the cut 12 and cleaning the diamond wire can be separated with only one cleaning system equipped with a suitable filtration and pump assembly 19 for the recirculation of water. The recirculation of cooling water could occur in an industrial water purifying system used in an industrial works. Furthermore, although again it would be less beneficial, instead of water as a cooling and cleaning liquid, emulsified water with additives can be used to facilitate the cutting of the diamond into stone without dirtying the slabs obtained from the block of stone.

## Claims

1. A diamond wire machine for cutting natural or artificial stone, comprising:
water distribution system (12) for cooling within the cut made by the diamond wire in the stone; at least one closed loop diamond wire (3) which, following a closed line of movement, repeats the cut during its movement deeper in to the stone; rotating organs (4, 5) for the support, motorization and tension of the diamond wire; **characterized in that** it presents a further cleaning system for the diamond wire with at least one washing area (13 or 16 or 17) immediately after and before the cutting area during the run of the wire, in relation to the first organ of support and motorization (4) of the said wire, which the wire comes into contact with after the cut; the cleaning system comprising a filtration and pump assembly (19) for the recirculation of water that supplies the washing area at high pressure.

2. A diamond wire machine for cutting natural or artificial stone, according to claim 1, in which a multiple closed loop diamond wires (3) simultaneously cut a block (2) of stone.

3. A diamond wire machine for cutting natural or artificial stone, according to one of the above claims 1, 2, in which in addition to the first washing area (13 or 16 or 17) there is at least a second washing area (13 or 16 or 17 or 18) on the line of movement of the diamond wire connected to it and positioned at the same interval as the first washing area.

4. A diamond wire machine for cutting natural or artificial stone, according to claim 3, in which the washing areas are at least three, of which one (18) is positioned on the first organ of support and motorization (4) of the said wire.

5. A diamond wire machine for cutting natural or artificial stone, according to claim 3, in which the washing areas are at least three of which at least two (16, 17) are positioned near to each other after the cutting area and before the first organ of support and motorization (4) of the said wire.

6. A diamond wire machine for cutting natural or artificial stone, according to claim 3, in which the washing areas are at least four of which at least two are positioned near to each other (16, 17) after the cutting area and before the first organ of support and motorization of the said wire and the fourth (18) is positioned on the first organ of support and motorization (4) of the said wire.

7. A diamond wire machine for cutting natural or artificial stone, according to one of the above claims, in which the washing areas comprise a transversal tube (22) equipped with nozzles. (23) with an elliptic jet (24), having larger dimension than the jet placed in the direction of the diamond wire (3) and aligned with it.

8. A diamond wire machine for cutting natural or artificial stone, according to one of the above claims 2 to 7, in which the washing areas comprise a transversal tube (22) equipped with nozzles (23) aligned (26, 27) on staggered lines (G, P) in correspondence with the position of the contiguous diamond wires (3).

9. A diamond wire machine for cutting natural or artificial stone, according to one of the above claims 2 to 7, in which the pressure of the cleaning water is high, to result in an exit speed of between 20 and 30 m/s inclusively of the jet from its relative nozzle (23).

10. A diamond wire machine for cutting natural or artificial stone, according to one of the above claims 2 to 7, in which the filtration and pump assembly (19) comprises two metallic cartridge filters (20) that work in tandem or alternately when it is necessary to perform maintenance and cleaning on one of the filters.

## Patentansprüche

1. Diamantdrahtmaschine zum Schneiden von natürlichem oder künstlichem Stein, umfassend: ein Wasserverteilungssystem (12) zum Kühlen innerhalb des durch den Diamantdraht in dem Stein ausgeführten Schnittes; wenigstens eine geschlossene Diamantdrahtschleife (3) welche, einer geschlossenen Bewegungslinie folgend, während ihrer Bewegung den Schnitt tiefer in den Stein hinein wiederholt; rotierende Organe (4, 5) für die Abstützung, Motorisierung und Spannung des Diamantdrahtes, **dadurch gekennzeichnet, dass** sie ein weiteres Reinigungssystem für den Diamantdraht aufweist mit mindestens einem Waschbereich (13 oder 16 oder 17) unmittelbar hinter und vor dem Schneidbereich während des Laufens des Drahtes, in Beziehung zu dem ersten Organ zur Abstützung und Motorisierung (4) des Drahtes, womit der Draht nach dem Schnitt in Kontakt kommt; wobei das Reinigungssystem eine Filter- und Pumpenanordnung (19) für die Rückführung von Wasser umfasst, welches den Waschbereich bei hohem Druck versorgt.

2. Diamantdrahtmaschine zum Schneiden von natürlichem oder künstlichem Stein nach Anspruch 1, wobei mehrere geschlossene Diamantdrahtschleifen (3) gleichzeitig einen Steinblock (2) schneiden.

3. Diamantdrahtmaschine zum Schneiden von natürlichem oder künstlichem Stein nach einem der Ansprüche 1 oder 2, wobei zusätzlich zu dem ersten Waschbereich (13 oder 16 oder 17) wenigstens ein zweiter Waschbereich (13 oder 16 oder 17 oder 18) vorgesehen ist auf der Bewegungslinie des Diamantdrahtes, mit diesem verbunden und im gleichen Intervall angeordnet wie der erste Waschbereich.

4. Diamantdrahtmaschine zum Schneiden von natürlichem oder künstlichem Stein nach Anspruch 3, wobei wenigstens drei Waschbereiche vorgesehen sind, von denen einer (18) an dem ersten Organ zur Abstützung und Motorisierung (4) des Drahtes angeordnet ist.

5. Diamantdrahtmaschine zum Schneiden von natürlichem oder künstlichem Stein nach Anspruch 3, wobei wenigstens drei Waschbereiche vorgesehen sind, von denen wenigstens zwei (16, 17) nahe beieinander hinter dem Schneidbereich und vor dem ersten Organ zur Abstützung und Motorisierung (4) des Drahtes angeordnet sind.

6. Diamantdrahtmaschine zum Schneiden von natürlichem oder künstlichem Stein nach Anspruch 3, wobei wenigstens vier Waschbereiche vorgesehen sind, von denen wenigstens zwei nahe beieinander (16, 17) hinter dem Schneidbereich und vor dem ersten Organ zur Abstützung und Motorisierung des Drahtes angeordnet sind und der vierte (18) an dem ersten Organ zur Abstützung und Motorisierung (4) des Drahtes angeordnet ist.

7. Diamantdrahtmaschine zum Schneiden von natürlichem oder künstlichem Stein nach einem der vorangehenden Ansprüche, wobei die Waschbereiche eine quer verlaufende Röhre (22) umfassen, welche mit Düsen (23) mit einem elliptischem Strahl (24) versehen ist, mit einer größeren Dimensionierung als der in der Richtung des Diamantdrahtes (3) angeordnete und mit diesem fluchtende Strahl.

8. Diamantdrahtmaschine zum Schneiden von natürlichem oder künstlichem Stein nach einem der Ansprüche 2 bis 7, wobei die Waschbereiche eine quer verlaufende Röhre (22) umfassen, welche mit Düsen (23) versehen ist, die auf versetzten Linien (G, P) in Übereinstimmung mit der Position der angrenzenden Diamantdrähte (3) ausgerichtet sind (26, 27).

9. Diamantdrahtmaschine zum Schneiden von natürlichem oder künstlichem Stein nach einem der Ansprüche 2 bis 7, wobei der Druck des Reinigungswassers hoch ist, um zu einer Austrittsgeschwindigkeit des Strahls aus der jeweiligen Düse (23) zwischen 20 und 30 m/s einschließlich zu führen.

10. Diamantdrahtmaschine zum Schneiden von natürlichem oder künstlichem Stein nach einem der Ansprüche 2 bis 7, wobei die Filter-und Pumpvorrichtung (19) zwei metallische Filtereinsätze (20) umfasst, die hintereinander oder abwechselnd arbeiten, wenn es erforderlich ist, an einem der Filter Wartungs- und Reinigungsmaßnahmen durchzuführen.

## Revendications

1. Machine à fil diamanté pour découper de la pierre naturelle ou artificielle, comprenant :
un système de distribution d'eau (12) pour refroidir l'intérieur de la découpe réalisée par le fil diamanté dans la pierre ; au moins un fil diamanté en boucle fermée (3) qui, en suivant une ligne fermée de déplacement, répète la découpe pendant son déplacement plus en profondeur dans la pierre ; des organes rotatifs (4, 5) pour le support, la motorisation et la tension du fil diamanté ; **caractérisée en ce qu'**elle présente un système de nettoyage supplémentaire pour le fil diamanté avec au moins une zone de lavage (13 ou 16 ou 17) immédiatement après et avant la zone de découpe pendant la course du fil, par rapport au premier organe de support et de motorisation (4) dudit fil, avec lequel le fil vient en contact après la découpe ; le système de nettoyage comprenant un ensemble de filtration et de pompe (19) pour la recirculation de l'eau qui alimente la zone de lavage à haute pression.

2. Machine à fil diamanté pour découper de la pierre naturelle ou artificielle selon la revendication 1, dans laquelle une pluralité de fils diamantés en boucle fermée (3) coupent simultanément un bloc (2) de pierre.

3. Machine à fil diamanté pour découper de la pierre naturelle ou artificielle selon l'une des revendications 1, 2, dans laquelle en plus de la première zone de lavage (13 ou 16 ou 17), il y a au moins une deuxième zone de lavage (13 ou 16 ou 17 ou 18) sur la ligne de déplacement du fil diamanté raccordée à cette dernière et positionnée au même intervalle que la première zone de lavage.

4. Machine à fil diamanté pour découper de la pierre naturelle ou artificielle selon la revendication 3, dans laquelle les zones de lavage sont au moins trois, dont l'une (18) est positionnée sur le premier organe de support et de motorisation (4) dudit fil.

5. Machine à fil diamanté pour découper de la pierre naturelle ou artificielle selon la revendication 3, dans laquelle les zones de lavage sont au moins trois, dont au moins deux (16, 17) sont positionnées l'une à côté de l'autre après la zone de découpe et avant le premier organe de support et de motorisation (4) dudit fil.

6. Machine à fil diamanté pour découper de la pierre naturelle ou artificielle selon la revendication 3, dans laquelle les zones de lavage sont au moins quatre, dont au moins deux sont positionnées l'une à côté de l'autre (16, 17) après la zone de découpe et avant le premier organe de support et de motorisation dudit fil et le quatrième (18) est positionné sur le premier organe de support et de motorisation (4) dudit fil.

7. Machine à fil diamanté pour découper de la pierre naturelle ou artificielle selon l'une des revendications précédentes, dans laquelle les zones de lavage comprennent un tube transversal (22) équipé de buses (23) avec un jet elliptique (24), ayant une plus grande dimension que le jet placé dans la direction du fil diamanté (3) et aligné avec ce dernier.

8. Machine à fil diamanté pour découper de la pierre naturelle ou artificielle selon les revendications 2 à 7, dans laquelle les zones de lavage comprennent un tube transversal (22) équipé de buses (23) alignées (26, 27) sur des lignes en quinconce (G, P) en correspondance avec la position des fils diamantés (3) contigus.

9. Machine à fil diamanté pour découper de la pierre naturelle ou artificielle selon les revendications. 2 à 7, dans laquelle la pression de l'eau de lavage est élevée, pour se traduire par une vitesse de sortie comprise entre 20 et 30 m/s y compris, du jet à partir de sa buse (23) relative.

10. Machine à fil diamanté pour découper de la pierre naturelle ou artificielle selon les revendications 2 à 7, dans laquelle l'ensemble de filtration et de pompe (19) comprend deux filtres à cartouche métalliques (20) qui fonctionnent en tandem ou de manière alternée lorsqu'il est nécessaire de réaliser l'entretien et le nettoyage de l'un des filtres.
